# EUROPÄISCHE PATENTSCHRIFT

(11) **EP 4 370 396 B1**
(45) Veröffentlichungstag und Bekanntmachung des Hinweises auf die Patenterteilung: **17.09.2025**
(21) Anmeldenummer: 22720584.6
(22) Anmeldetag: 31.03.2022
(51) Int. Cl.: B60W 40/10, B60W 10/04, B60W 10/184, B60W 30/18, B60K 28/16, B60T 8/175

(54) **VERFAHREN ZUR ANTRIEBSREGELUNG**
METHOD FOR DRIVE CONTROL
PROCÉDÉ DE COMMANDE D'ENTRAÎNEMENT

(30) Priorität: 14.07.2021 DE 102021207500
(43) Veröffentlichungstag der Anmeldung: 22.05.2024
(73) Patentinhaber: Robert Bosch GmbH, 70442 Stuttgart (DE)
(72) Erfinder: KRAUSE, Jonas, 74626 Waldbach (DE); ERDEN, Michael, 74321 Bietigheim-Bissingen (DE); STUMM, Marco, 71636 Ludwigsburg (DE)
(86) Internationale Anmeldenummer: PCT/EP2022/058647
(87) Internationale Veröffentlichungsnummer: WO 2023/285006

(56) Entgegenhaltungen:
- US-A1- 2003 105 573
- US-A1- 2011 022 284
- US-B1- 8 930 104

## Beschreibung

Die vorliegende Erfindung betrifft ein Verfahren zur Antriebsregelung von Aktuatoren mindestens eines Rades eines Fahrzeugs. Außerdem betrifft die Erfindung eine Antriebsregelungssteuerung, ein Fahrzeug, ein Programmelement und ein computerlesbares Medium.

### Stand der Technik

Zur Antriebsregelung von Aktuatoren mindestens eines Rades eines Fahrzeugs werden in vielen Fällen eine Vielzahl von Teilsystemen eingesetzt, deren konsistentes Zusammenwirken erst nach dem Zusammenfügen der Teilsysteme getestet und/oder optimiert werden kann. Dies kann in zumindest einigen Fällen erheblichen Aufwand verursachen. Es ist daher wünschenswert, die Anzahl der Teilsysteme zur Antriebsregelung zu reduzieren und die erforderlichen Funktionen in wenigen, im besten Fall in einer einzigen Antriebsregelungssteuerung, zusammenzufassen.

Das Dokument US 2003/0105573 A1 offenbart ein Fahzeuggeschwindigkeitssteuersystem für ein Fahrzeug, das mit einem Motor und einem Automatikgetriebe ausgerüstet ist. Das Fahrzeugssteuersystem umfasst: einen Schalter zum Verkleinern einer eingestellten Fahrzeuggeschwindigkeit, wenn der Schalter eingeschaltet ist; und ein Controller, der mit dem Schalter verbunden ist. Der Controller steuert die Fahrzeuggeschwindigkeit auf die eingestellte Fahrzeuggeschwindigkeit durch Steuern einer Drossel des Motors und des Automatikgetriebes. Der Controller hält das Übersetzungsverhältnis des Automatikgetriebes auf dem Übersetzungsverhältnis, welches in dem Moment eingestellt wird, bevor die eingestellte Fahrzeuggeschwindigkeit dadurch verkleinert wird, dass der Schalter eingeschaltet wird, bis der Schalter ausgeschaltet wird.

### Offenbarung der Erfindung

Es ist Aufgabe der Erfindung, eine Antriebsregelungssteuerung zur Verfügung zu stellen, die eine Vielzahl von dafür relevanten Parametern in einer konsistenten Weise berücksichtigt. Diese Aufgabe wird durch den Gegenstand der unabhängigen Patentansprüche gelöst. Weiterbildungen der Erfindung ergeben sich aus den Unteransprüchen und der folgenden Beschreibung.

Ein Aspekt betrifft ein Verfahren zur Antriebsregelung von Aktuatoren mindestens eines Rades eines Fahrzeugs, mit den Schritten:
erfassen einer gewünschten Beschleunigung;
erfassen einer Fahrzeuggeschwindigkeit des Fahrzeugs;
erfassen einer Radgeschwindigkeit des Rades;
bestimmen einer Zustandsbeschreibung des Rades, aus einer Radgeschwindigkeit und einer Radbeschleunigung, wobei die Zustandsbeschreibung eine statische Beschreibung umfasst, die eine Funktion der Radgeschwindigkeit und der Radbeschleunigung ist;
bestimmen eines ersten Wertes einer Radzielbeschleunigung, aus der Zustandsbeschreibung, einem Schlupf des Rades und der gewünschten Beschleunigung, wobei der Schlupf eine Funktion der Radgeschwindigkeit und der Fahrzeuggeschwindigkeit ist;
bestimmen eines zweiten Wertes der Radzielbeschleunigung, aus der Radgeschwindigkeit, der Radbeschleunigung und dem Schlupf, wobei der zweite Wert eine Funktion von Korrekturfaktoren mindestens einer Matrix ist; und bestimmen eines dritten Wertes der Radzielbeschleunigung, welcher die Aktuatoren des mindestens einen Rades steuert, wobei der dritte Wert eine Funktion des ersten Wertes und des zweiten Wertes ist.

Das Fahrzeug kann beispielsweise ein Landfahrzeug sein, es kann insbesondere ein Personenkraftwagen, ein Transporter, ein Lastwagen, ein Motorrad oder ein landgebundenes Spezialfahrzeug sein. Das Fahrzeug kann ein zumindest teilweise automatisiert fahrendes Fahrzeug sein. Das Fahrzeug kann zwei, drei, vier oder mehr Räder aufweisen. Unter einem Rad kann ein einzelnes Rad, ein Zwillingsrad - z.B. eines Lastwagens oder Motorrads - und/oder eine andere Art von Mehrfachrad verstanden werden. Die Aktuatoren können z.B. einen Antriebsstrang (powertrain) und/oder eine Bremse umfassen. Der Antriebsstrang kann einen Verbrennungsmotor und/oder einen Elektromotor aufweisen. Der Antriebsstrang kann auf ein einzelnes Rad oder auf mehrere Räder, insbesondere auf eine Achse, wirken. Die Bremse kann auf ein einzelnes Rad oder auf mehrere Räder wirken.

Die gewünschte Beschleunigung kann z.B. mittels eines sogenannten Gaspedals, eines Joysticks, eines Assistenzsystems (z.B. Tempomat, usw.) und/oder von einer anderen Art von Sensor erfasst werden. Die Fahrzeuggeschwindigkeit v_{GND} des Fahrzeugs ist die Geschwindigkeit des Fahrzeugs über Grund. Die Fahrzeuggeschwindigkeit kann z.B. über eine Mittelung, ein Voting, und/oder mittels anderer Methoden aus den Radgeschwindigkeiten mindestens zweier Räder, mittels Beschleunigungssensoren, Positionsbestimmungssystemen wie z.B. GPS (Global Positioning System), einer Kombination dieser Methoden und/oder mittels anderer Methoden ermittelt werden. Die Radgeschwindigkeit des Rades kann z.B. mittels eines oder mehrerer Sensoren an dem Rad und/oder einer Achse, mit der das Rad direkt verbunden ist, ermittelt werden. Die Radbeschleunigung bzw. die Raddynamik ist die erste bzw. die zweite Ableitung der Radgeschwindigkeit nach der Zeit. Die Radbeschleunigung und/oder die Raddynamik können berechnet und/oder direkt von dem einen oder mehreren Sensoren zur Verfügung gestellt werden.

Die Zustandsbeschreibung des Rades, aus der Radgeschwindigkeit und der Radbeschleunigung, umfasst eine statische Beschreibung als Funktion der Radgeschwindigkeit und der Radbeschleunigung. Die Funktion kann eine logische Kombination von Bereichen der Radgeschwindigkeit und der Radbeschleunigung umfassen, beispielsweise in einer Form "aktuelle Radgeschwindigkeit größer gewünschte Radgeschwindigkeit UND aktuelle Radbeschleunigung größer gewünschte Radbeschleunigung". Dabei kann die aktuelle Radgeschwindigkeit bzw. aktuelle Radbeschleunigung z.B. aus der Radgeschwindigkeit und die gewünschte Radgeschwindigkeit bzw. gewünschte Radbeschleunigung aus der gewünschten Beschleunigung ermittelt worden sein. Die Zustandsbeschreibung bzw. die Funktion kann optional die Raddynamik berücksichtigen.

Die Antriebsregelung kann das Bestimmen der Radzielbeschleunigung, d.h. die Beschleunigung (oder abgeleitete Größen wie z.B. Drehmoment) umfassen, mit der die Aktuatoren beaufschlagt werden. Die Radzielbeschleunigung kann in mehreren Stufen und/oder durch eine Kombination von mehreren Werten bestimmt werden.

Der erste Wert der Radzielbeschleunigung kann einen qualitativen Wert umfassen, zum Beispiel einen Wert, welcher eine Wertemenge { Beschleunigen, Abbremsen, Halten } umfasst. Der qualitative Wert kann vorteilhafterweise dazu beitragen, "grobe" Fehler bei dem Bestimmen der Radzielbeschleunigung zu vermeiden, und kann auf diese Weise dazu beitragen, Instabilitäten als Folge des Bestimmens der Radzielbeschleunigung zu vermeiden. Der Schlupf s, als Funktion der Radgeschwindigkeit v und der Fahrzeuggeschwindigkeit v_{GND}, kann beispielsweise in Prozent und/oder in m/s definiert sein. Der Schlupf s kann z.B. aus einer Formel s = v_{GND} - v bestimmt worden sein.

Der zweite Wert der Radzielbeschleunigung kann einen quantitativen Wert umfassen, zum Beispiel einen Wert "plus 2 Nm", "minus 0,5 Nm". Der zweite Wert, als Funktion von Korrekturfaktoren mindestens einer Matrix, kann z.B. ein Element der Matrix direkt übernehmen, mit einer Gewichtung und/oder einer anderen Funktion versehen und/oder zwischen zwei Werten der Matrix interpolieren. Die Matrix kann als eine einzige Matrix implementiert sein, oder als eine Vielzahl von Matrizen. Beispielsweise kann jedes einzelne Rad je eine Matrix mit Korrekturfaktoren für den Antriebsstrang und die Bremse, und/oder für positive und für negative Beschleunigung, und/oder weitere Matrizen, umfassen. Der zweite Wert kann z.B. experimentell, mittels Simulation(en), durch Experten, durch ein neuronales Netz und/oder mittels anderer Methoden ermittelt worden sein. Der zweite Wert kann für die Laufzeit des Fahrzeugs unveränderlich sein, oder kann veränderlich sein, z.B. auf Basis einer Wartung, eines Reifenwechsels, eines Trainings eines neuronalen Netzes und/oder anderer Ereignisse oder Trigger.

Der dritte Wert der Radzielbeschleunigung kann eine Funktion des ersten Wertes und des zweiten Wertes sein, insbesondere kann der dritte Wert aus dem ersten Wert, dem zweiten Wert und/oder aus weiteren Werten und/oder Informationen gebildet werden. Der dritte Wert kann als ein einziger Wert und/oder als ein zusammengesetzter Wert - z.B. umfassend je einen Wert für den Antriebsstrang und für die Bremse - implementiert sein.

Durch dieses Verfahren wird vorteilhafterweise eine Vielzahl von relevanten Parametern einer Antriebsregelung in konsistenter Weise berücksichtigt. Dies kann das Testen und/oder das Optimieren der Antriebsregelung in mehreren Aspekten verbessern, z.B. in Bezug auf Testzeit, Fehlerwahrscheinlichkeit, Stabilität, Wartungsfreundlichkeit und/oder weitere Aspekte. Insbesondere vorteilhaft ist, dass dadurch potentielle Instabilitäten von vorneherein reduziert oder sogar vermieden werden können. Darüber hinaus kann durch dieses Verfahren eine Grundlage für eine Optimierung der Antriebsregelung während der Betriebszeit des Fahrzeugs gelegt werden, beispielsweise durch Fortschritte bei Simulationen und/oder lernenden Maschinen wie z.B. neuronalen Netzen. Dabei kann insbesondere vorteilhafterweise sein, dass Änderungen in vielen Ausführungsformen dieses Verfahren nur die Matrix betreffen können.

In einigen Ausführungsformen umfasst die Zustandsbeschreibung des Rades weiterhin eine dynamische Beschreibung, die eine Funktion der Radbeschleunigung und einer Raddynamik ist. Dabei ist unter dynamischer Beschreibung die Beschreibung eines statischen Ist-Zustands in Kombination mit einem definierten Vergangenheitszeitfensters - z.B. größer 0,5 ms, größer 1 ms, größer 2 ms, in vielen Fällen ein Vielfaches der Rechenzeit bzw. Zykluszeit - zu verstehen. Mögliche Beschreibungsformen für die dynamische Beschreibung können beispielsweise umfassen:
- Die Zustandsbeschreibung des Rads hat im definierten Vergangenheitszeitfenster den aktuell gültigen Zustandsgrenzbereich, z.B. abhängig von der aktuellen Zustandsbeschreibung, nicht verlassen ("Steady in State").
- Die Zustandsbeschreibung des Rads hat im definierten Vergangenheitszeitfenster kontinuierlich Zustandsgrenzbereiche in positive Richtung überschritten und zeigt auch in der aktuellen Zustandsbeschreibung einen Trend in positive Richtung ("State ascended & Signal increasing").
- Die Zustandsbeschreibung des Rads hat im definierten Vergangenheitszeitfenster kontinuierlich Zustandsgrenzbereiche in positive Richtung überschritten, zeigt allerdings in der aktuellen Zustandsbeschreibung einen Trend in die gegengesetzte Richtung ("State ascended & Signal decreasing").
- Die Zustandsbeschreibung des Rads hat im definierten Vergangenheitszeitfenster kontinuierlich Zustandsgrenzbereiche in negative Richtung überschritten und zeigt auch in der aktuellen Zustandsbeschreibung einen Trend in negative Richtung ("State decended & Signal decreasing").

In einigen Ausführungsformen umfasst die Zustandsbeschreibung des Rades weiterhin eine prädiktive Beschreibung, die eine Funktion der Raddynamik ist. Unter Radprädiktion ist die Beschreibung des statischen Ist-Zustands in Kombination mit einem definierten Prädiktionszeitfensters (Zukunft) zu verstehen. Mögliche Beschreibungsformen für Radprädiktionen oder die prädiktive Beschreibung können beispielsweise umfassen:
- Die Zustandsbeschreibung des Rads wird im definierten Prädiktionszeitfenster mit der aktuell wirkenden Dynamik den Zielbereich wahrscheinlich treffen ("TargetZone hit").
- Die Zustandsbeschreibung des Rads wird im definierten Prädiktionszeitfenster mit der aktuell wirkenden Dynamik den Zielbereich wahrscheinlich überschreiten/überschießen ("TargetZone crossed").
- Die Zustandsbeschreibung des Rads wird im definierten Prädiktionszeitfenster mit der aktuell wirkenden Dynamik den Zielbereich nicht treffen, bewegt sich aber tendenziell in Richtung des Zielbereichs ("TargetZone not crossed, but high deviation in TargetZone direction").
- Die Zustandsbeschreibung des Rads wird im definierten Prädiktionszeitfenster mit der aktuell wirkenden Dynamik den Zielbereich nicht treffen und entfernt sich sogar noch tendenziell vom Zielbereich ("TargetZone not crossed and high deviation from TargetZone away").

In einigen Ausführungsformen sind die Korrekturfaktoren oder Elemente der mindestens einen Matrix nach aufsteigendem Schlupf und nach aufsteigender Radbeschleunigung geordnet, und die mindestens eine Matrix weist einen ersten Bereich auf, dessen Elemente einen Korrekturfaktor von Null aufweisen. Die Elemente der Matrix können einen äquidistanten Abstand der Schlupf- und/oder Radbeschleunigungswerte aufweisen und/oder andere Abstandsfunktionen. Korrekturfaktoren "zwischen" den Elementen können interpolierbar sein. Die Elemente mit einem Korrekturfaktor von Null werden gelegentlich als Zielschlupfbereich bezeichnet. Die Verwendung einer derartigen Matrix kann zu einer guten Nachprüfbarkeit und/oder Änderbarkeit der Antriebsregelung beitragen.

In einigen Ausführungsformen ist der dritte Wert der Radzielbeschleunigung eine Funktion einer Summe des ersten Wertes und des zweiten Wertes. Beispielsweise können der erste und der zweite Wert auf Plausibilität geprüft werden und, davon abhängig, summiert werden. Wenn der erste Wert beispielsweise "halten" und der zweite Wert "plus 5 Nm" ist, dann kann der zweite Wert z.B. unberücksichtigt bleiben oder auf eine "Milderungsfunktion" abgebildet werden. In einigen Ausführungsformen ist der dritte Wert eine Funktion einer Begrenzung der Summe des ersten Wertes und des zweiten Wertes. Die Begrenzung kann z.B. dann angewandt werden, wenn das summierte Sollmoment zu hoch ist, z.B. zu hoch für den Antriebsstrang oder z.B. sich zu sehr von einem Sollmoment eines anderen Rades der Achse unterscheidet. Die Begrenzungsfunktion kann vorteilhafterweise Inkonsistenzen vermeiden und/oder die Stabilität der Antriebsregelung weiter verbessern.

In einer Ausführungsform weist das Verfahren weitere Schritte auf:
erfassen des dritten Wertes für mindestens eine Situation, wobei die Situation die Radgeschwindigkeit, die Radbeschleunigung und, optional, die Raddynamik umfasst;
vergleichen des dritten Wertes mit dem entsprechenden Korrekturfaktor der mindestens einen Matrix; und
wenn der Schlupf bei Verwendung des dritten Wertes geringer ist als bei Verwendung des entsprechenden Korrekturfaktors der mindestens einen Matrix, eintragen dritten Wertes in das entsprechende Element der mindestens einen Matrix.

Diese weiteren Schritte können z.B. während des Betriebs, oder, mit Zwischenspeichern, in einer Betriebspause und/oder während der Wartung durchgeführt werden. Die Schritte können insbesondere die immanente Flexibilität des Verfahrens, insbesondere der Matrixlösung, nützen. Diese Schritte können vorteilhafterweise zu einer kontinuierlichen Verbesserung der Antriebsregelung durch die Verwendung von individuellen Praxiswerten dieses Fahrzeugs beitragen.

Ein Aspekt betrifft eine Antriebsregelungssteuerung zur Antriebsregelung von Aktuatoren mindestens eines Rades eines Fahrzeugs. Die Antriebsregelungssteuerung weist dabei auf: Eine Signalerfassungseinheit, die zum Erfassen einer Radgeschwindigkeit des Rades und zum Erfassen einer Radbeschleunigung und/oder einer Raddynamik, eingerichtet ist. Weiterhin eine weitere Erfassungseinheit, die zum Erfassen einer gewünschten Beschleunigung und einer Fahrzeuggeschwindigkeit des Fahrzeugs eingerichtet ist. Die weitere Erfassungseinheit kann auch als Sollsignalerfassungseinheit bezeichnet werden.

Ferner weist die Antriebsregelungssteuerung eine Zustandsbestimmungseinheit auf, die zum Bestimmen einer Zustandsbeschreibung des Rades, aus der Radgeschwindigkeit und der Radbeschleunigung, eingerichtet ist, und eine Aktionsbestimmungseinheit, die zum Bestimmen eines ersten Wertes einer Radzielbeschleunigung, aus der Zustandsbeschreibung, einem Schlupf des Rades und der gewünschten Beschleunigung, eingerichtet ist, wobei der Schlupf eine Funktion der Radgeschwindigkeit und der Fahrzeuggeschwindigkeit ist. Weiterhin weist diese eine Korrektureinheit auf, aufweisend mindestens eine Matrix, die Korrekturfaktoren beinhaltet und die zum Bestimmen eines zweiten Wertes der Radzielbeschleunigung eingerichtet ist. Der erste und der zweite Wert werden zu einem Aktuatorsteuergerät geleitet, das zum Steuern der Aktuatoren des mindestens einen Rades aus einer Funktion des ersten Wertes und des zweiten Wertes eingerichtet ist.

Ein Aspekt betrifft ein Fahrzeug, aufweisend eine Antriebsregelungssteuerung wie oben und/oder nachfolgend beschrieben.

Ein Aspekt betrifft ein Programmelement, welches, wenn es auf einer Antriebsregelungssteuerung wie oben und/oder nachfolgend beschrieben ausgeführt wird, die Antriebsregelungssteuerung anleitet, das Verfahren wie oben und/oder nachfolgend beschrieben durchzuführen.

Ein Aspekt betrifft ein computerlesbares Medium, auf dem ein Programmelement nach wie oben beschrieben gespeichert ist.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
- **Fig. 1**: schematisch ein Bild eines Fahrzeugs gemäß einer Ausführungsform;
- **Fig. 2**: schematisch eine Antriebsregelungssteuerung gemäß einer Ausführungsform;
- **Fig. 3**: schematisch eine Matrix gemäß einer Ausführungsform;
- **Fig. 4**: ein Flussdiagramm gemäß einer Ausführungsform.

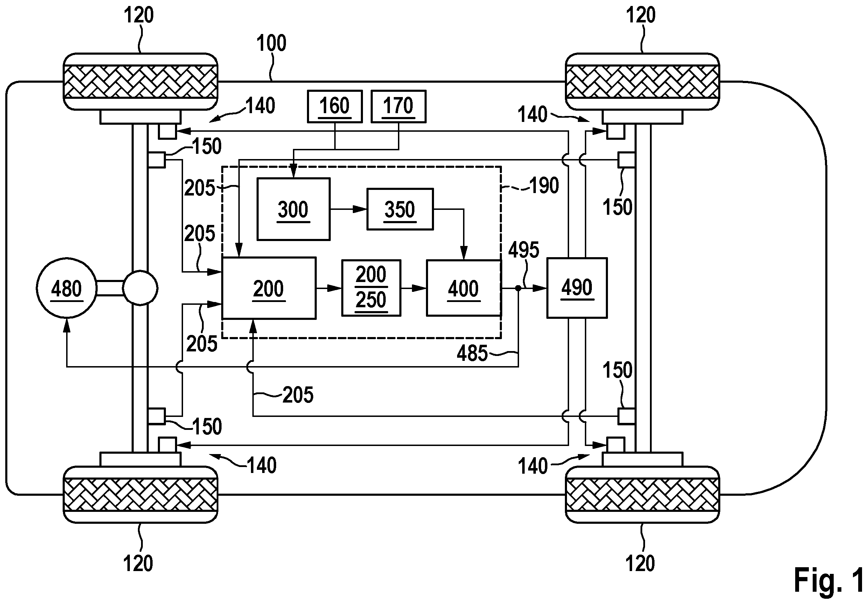

**Fig. 1** zeigt schematisch ein Bild eines Fahrzeugs 100 gemäß einer Ausführungsform. Das Fahrzeug des gezeigten Ausführungsbeispiels weist - ohne Einschränkung der Allgemeinheit - vier Räder 120 mit Bremsen 140 auf. Die Bremsen 140 werden von Aktuatoren 490 angesteuert. In einer beispielhaften alternativen Ausführungsform können die Aktuatoren 490 z.B. auch Teil der Bremsen 140 sein; auch weitere Ausführungsformen sind möglich. Das Fahrzeug 100 weist weiterhin Aktuatoren 480 auf, die z.B. Teil des Antriebsstrangs sein können. Das Fahrzeug 100 weist ferner Sensoren 150 für eine Radgeschwindigkeit v jedes Rades 120 auf, die z.B. an dem Rad 120 und/oder an der Achse angeordnet sein können. Die Sensoren 150 können darüber hinaus eine Radbeschleunigung a und/oder eine Raddynamik j liefern. Weiterhin weist das Fahrzeug einen oder mehrere Sensoren 160 für eine gewünschte Beschleunigung DrvReq auf, z.B. von einem Gaspedal, einem Joystick, einem Assistenzsystem (z.B. einem Tempomat) und/oder von weiteren Quellen. Zudem weist das Fahrzeug einen oder mehrere Sensoren 170 für eine Fahrzeuggeschwindigkeit v_{GND} des Fahrzeugs 100 auf. Die Signale der Sensoren 150, 160, 170 werden zu Eingängen einer Antriebsregelungssteuerung 190 geleitet. Die Signale 485, 495 der Antriebsregelungssteuerung 190 werden zu den Aktuatoren 480, 490 geleitet.

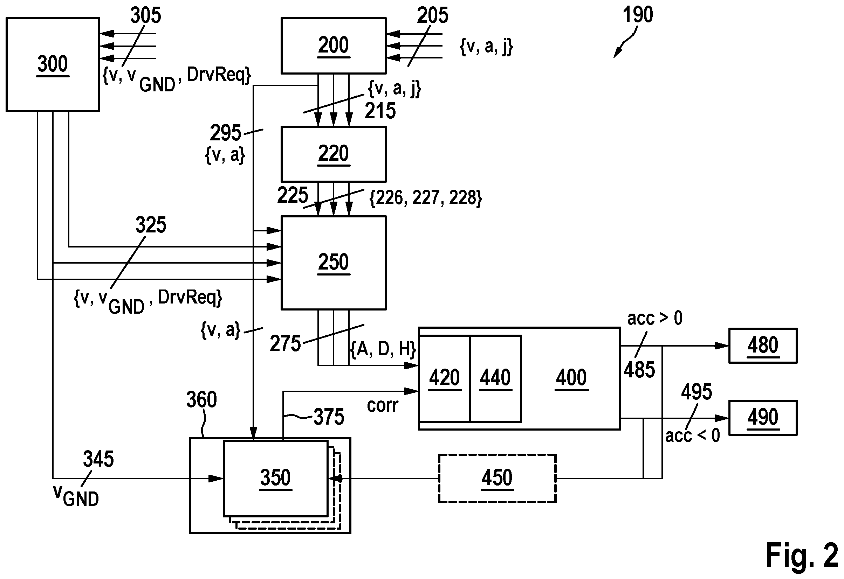

**Fig. 2** zeigt schematisch Details der Antriebsregelungssteuerung 190 von **Fig. 1****.** Gleiche Bezugszeichen bezeichnen gleiche oder ähnliche Komponenten. Eine Signalerfassungseinheit 200, die zum Erfassen einer Radgeschwindigkeit v des Rades 120 und, optional, zum Erfassen einer Radbeschleunigung a und/oder einer Raddynamik j, eingerichtet ist, erhält von den Sensoren 150 für jedes der Räder 120 Signale 205 der Radgeschwindigkeit v jedes Rades 120 und, optional, Signale der Radbeschleunigung a und/oder der Raddynamik j. Werden die Signale a und j nicht von den Sensoren 150 geliefert, so können diese Signale - z.B. von der Signalerfassungseinheit 200 - gebildet werden. Die Signale v, a, j 215 werden an eine Zustandsbestimmungseinheit 220 geleitet, die zum Bestimmen einer Zustandsbeschreibung 225 des Rades bzw. jedes Rades 120, aus v und a, optional auch aus j, eingerichtet ist.

Die Signale 305 der Sensoren 150, 160, 170 werden zu einer weiteren Erfassungseinheit 300 geleitet, die zum Erfassen der gewünschten Beschleunigung DrvReq (von dem Sensor 160) und einer Fahrzeuggeschwindigkeit v_{GND} (von dem Sensor 170) des Fahrzeugs 100 eingerichtet ist. Ein Schlupf s kann von der Erfassungseinheit 300 und/oder von nachgeordneten Komponenten gebildet werden. Der Schlupf s kann für jedes der Räder 120 als eine Funktion der Radgeschwindigkeit v und der Fahrzeuggeschwindigkeit v_{GND} gebildet werden. Eine Aktionsbestimmungseinheit 250, bestimmt einen ersten Wert 275 einer Radzielbeschleunigung, aus der Zustandsbeschreibung 225, dem Schlupf s des Rades 120 und der gewünschten Beschleunigung DrvReq. Der erste Wert 275 kann z.B. aus einer Menge { Beschleunigen, Abbremsen, Halten } ausgewählt sein oder diese Menge umfassen. Eine Korrektureinheit 360 bestimmt einen zweiten Wert 375 der Radzielbeschleunigung, aus der Radgeschwindigkeit v, der Radbeschleunigung a und dem Schlupf s. Dabei weist die Korrektureinheit 360 mindestens eine Matrix 350 auf, die Korrekturfaktoren beinhaltet. Die Korrekturfaktoren der mindestens einen Matrix 350 können z.B. nach aufsteigendem Schlupf s und nach aufsteigender Radbeschleunigung a geordnet sein. "Lücken" in der Matrix 350 - z.B. wenn kein Eintrag in der Matrix 350 zu einem bestimmten Schlupf s und/oder zu einer bestimmten Radbeschleunigung a existiert - können beispielsweise mittels einer Interpolation "gefüllt" werden.

Die Ausgangssignale 275, 375 der Aktionsbestimmungseinheit 250 bzw. der Korrektureinheit 360 werden an ein Aktuatorsteuergerät 400 geleitet. Eine Summierungseinheit 420 kann die Werte der Ausgangssignale 275, 375 summieren und/oder für jedes Rad 120 ein Signal bilden, das eine Funktion der Ausgangssignale 275, 375 ist. Eine Begrenzungseinheit 440 kann die Ausgangssignale der Summierungseinheit 420 begrenzen, z.B. mittels einer funktionellen und/oder Plausibilitätsprüfung. Die Algorithmen dieser Prüfungen können z.B. eine maximal Leistung des Antriebsstrangs 480 und/oder der Bremsen 490, 140 berücksichtigen. Die Algorithmen dieser Prüfungen können z.B. funktionelle Zusammenhänge der Räder 120 berücksichtigen, z.B. (mechanische und/oder elektronische) Differentiale. Die Ausgangssignale 485, 495 des Aktuatorsteuergeräts 400 werden an den Antriebsstrang 480 bzw. die Bremsen 490, 140 geleitet.

Die Antriebsregelungssteuerung 190 kann optional eine Lerneinheit 450 umfassen. Dabei kann die Lerneinheit 450 für mindestens eine Situation einen oder mehrere dritte Werte 485, 495 erfassen. Die Situation kann die Radgeschwindigkeit v, die Radbeschleunigung a und, optional, die Raddynamik j umfassen. Die Lerneinheit 450 kann den dritten Wert 485, 495 mit dem entsprechenden Korrekturfaktor der mindestens einen Matrix 350 vergleichen. Weiterhin kann, wenn der Schlupf s bei Verwendung des dritten Wertes 485, 495 geringer ist als bei Verwendung des entsprechenden Korrekturfaktors der mindestens einen Matrix 350, ein Update des dritten Wertes 485, 495 in das entsprechende Element der mindestens einen Matrix 350 eintragen. Dadurch kann die Lerneinheit 450 aus der "Praxis" der Antriebsregelung dieses Fahrzeugs 100 lernen und die Steuerung damit verbessern. Es können alternativ oder zusätzlich weitere Möglichkeiten zum Update der einen Matrix 350 implementiert sein.

Die Komponenten der Antriebsregelungssteuerung 190 können als Hardware, Software und/oder aus einer Kombination von Hardware und Software realisiert sein. Die Komponenten können räumlich verteilt oder in einem einzigen Steuerungsgerät realisiert sein.

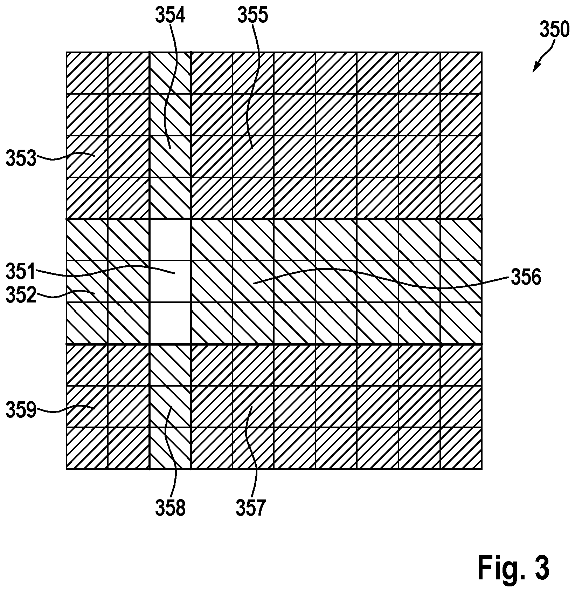

**Fig. 3** zeigt schematisch eine Matrix 350 gemäß einer Ausführungsform. Die Elemente der Matrix 350 umfassen Korrekturfaktoren, die zu Bildung des dritten Wertes 375 für je ein Rad 120 beitragen können. Die Korrekturfaktoren der mindestens einen Matrix 350 sind nach aufsteigendem Schlupf s (z.B. horizontal) und nach aufsteigender Radbeschleunigung a (z.B. vertikal) geordnet. Die Matrix 350 kann einen ersten Bereich 351 aufweisen, dessen Elemente einen Korrekturfaktor von Null aufweisen. Die weiteren Bereiche der Matrix 350 können beispielsweise folgendermaßen charakterisiert werden:
Bereich 352: Schlupf s ist geringer, Radbeschleunigung etwa Null;
Bereich 353: Schlupf s ist geringer, Radbeschleunigung größer;
Bereich 354: Schlupf s ist etwa Null, Radbeschleunigung größer;
Bereich 355: Schlupf s ist größer, Radbeschleunigung größer;
Bereich 356: Schlupf s ist größer, Radbeschleunigung etwa Null;
Bereich 357: Schlupf s ist größer, Radbeschleunigung geringer;
Bereich 358: Schlupf s ist etwa Null, Radbeschleunigung geringer;
Bereich 359: Schlupf s ist geringer, Radbeschleunigung geringer.

Die Elemente der Matrix können einen äquidistanten Abstand der Schlupf- und/oder Radbeschleunigungswerte und/oder andere Abstandsfunktionen aufweisen. Korrekturfaktoren "zwischen" den Elementen können interpolierbar sein.

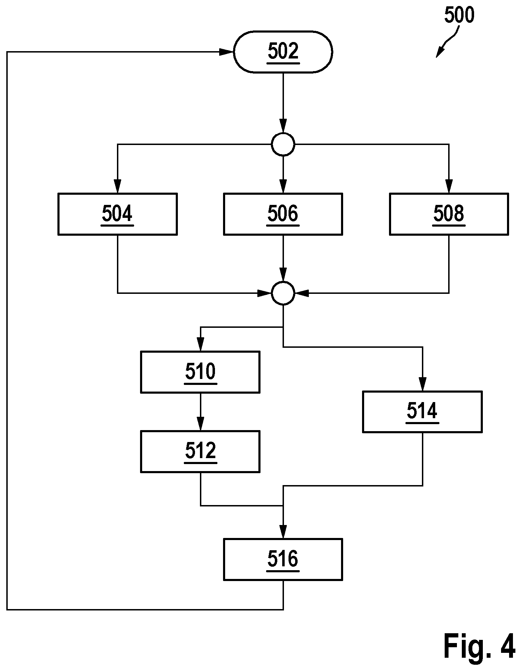

**Fig. 4** zeigt ein Flussdiagramm 500 gemäß einer Ausführungsform. In einem Schritt 502 startet das Verfahren. In einem Schritt 504 wird eine gewünschte Beschleunigung DrvReq (siehe **Fig. 2**) erfasst. In einem Schritt 506 wird eine Fahrzeuggeschwindigkeit v_{GND} des Fahrzeugs 100 erfasst. In einem Schritt 508 wird eine Radgeschwindigkeit v des Rades 120 erfasst. Die Schritte 504, 506, 508 können im Wesentlichen parallel durchgeführt werden.

In einem Schritt 510 wird eine Zustandsbeschreibung 225 des Rades 120 bestimmt, aus der Radgeschwindigkeit v und einer Radbeschleunigung a. Die Zustandsbeschreibung 225 umfasst eine statische Beschreibung 226, die eine Funktion der Radgeschwindigkeit v und der Radbeschleunigung a ist. In einem Schritt 512 wird ein erster Wert 275 einer Radzielbeschleunigung bestimmt, aus der Zustandsbeschreibung 225, einem Schlupf s des Rades 120 und der gewünschten Beschleunigung DrvReq. Dabei ist der Schlupf s eine Funktion der Radgeschwindigkeit v und der Fahrzeuggeschwindigkeit v_{GND}. In einem Schritt 514 wird ein zweiter Wert 375 der Radzielbeschleunigung bestimmt, aus der Radgeschwindigkeit v, der Radbeschleunigung a und dem Schlupf s, wobei der zweite Wert eine Funktion von Korrekturfaktoren mindestens einer Matrix 350 ist. Die Schritte 510, 512 und der Schritt 514 können im Wesentlichen parallel durchgeführt werden.

In einem Schritt 516 wird ein dritter Wert 585, 595 der Radzielbeschleunigung bestimmt, welcher die Aktuatoren 580, 590 des mindestens einen Rades 120 steuert, wobei der dritte Wert 585, 595 eine Funktion des ersten Wertes 275 und des zweiten Wertes 375 ist. Die Schritte 502 bis 516 können regelmäßig wiederholt werden, z.B. periodisch, z.B. alle 1 ms, 2 ms, 5 ms und/oder mit einer anderen Periodizität oder bzw. Zykluszeit.

## Patentansprüche

1. Verfahren zur Antriebsregelung von Aktuatoren (490, 480) mindestens eines Rades (120) eines Fahrzeugs (100), mit den Schritten:
erfassen einer gewünschten Beschleunigung (DrvReq);
erfassen einer Fahrzeuggeschwindigkeit (v_{GND}) des Fahrzeugs (100);
erfassen einer Radgeschwindigkeit (v) des Rades (120);
bestimmen einer Zustandsbeschreibung (225) des Rades (120), aus der Radgeschwindigkeit (v) und einer Radbeschleunigung (a),
wobei die Zustandsbeschreibung (225) eine statische Beschreibung (226) umfasst, die eine Funktion der Radgeschwindigkeit (v) und der Radbeschleunigung (a) ist;
bestimmen eines ersten Wertes (275) einer Radzielbeschleunigung, aus der Zustandsbeschreibung (225), einem Schlupf (s) des Rades (120) und der gewünschten Beschleunigung (DrvReq),
wobei der Schlupf (s) eine Funktion der Radgeschwindigkeit (v) und der Fahrzeuggeschwindigkeit (v_{GND}) ist;
**dadurch gekennzeichnet, dass** das Verfahren die folgende weitere Schritte aufweist:
bestimmen eines zweiten Wertes (375) der Radzielbeschleunigung, aus der Radgeschwindigkeit (v), der Radbeschleunigung (a) und dem Schlupf (s), wobei der zweite Wert eine Funktion von Korrekturfaktoren mindestens einer Matrix (350) ist; und
bestimmen eines dritten Wertes (485, 495) der Radzielbeschleunigung, welcher die Aktuatoren (480, 490) des mindestens einen Rades (120) steuert, wobei der dritte Wert (485, 495) eine Funktion des ersten Wertes (275) und des zweiten Wertes (375) ist.

2. Verfahren nach Anspruch 1,
wobei die Zustandsbeschreibung (225) des Rades (120) weiterhin eine dynamische Beschreibung (227) umfasst, die eine Funktion der Radbeschleunigung (a) und einer Raddynamik (j) ist.

3. Verfahren nach Anspruch 2,
wobei die Zustandsbeschreibung (225) des Rades (120) weiterhin eine prädiktive Beschreibung (228) umfasst, die eine Funktion der Raddynamik (j) ist.

4. Verfahren nach einem der vorhergehenden Ansprüche,
wobei die Korrekturfaktoren der mindestens einen Matrix (350) nach aufsteigendem Schlupf (s) und nach aufsteigender Radbeschleunigung (a) geordnet sind, und
wobei die mindestens eine Matrix (350) einen ersten Bereich (351) aufweist, dessen Elemente einen Korrekturfaktor von Null aufweisen.

5. Verfahren nach einem der vorhergehenden Ansprüche,
wobei der dritte Wert (485, 495) der Radzielbeschleunigung eine Funktion einer Summe des ersten Wertes (275) und des zweiten Wertes (375) ist.

6. Verfahren nach Anspruch 5,
wobei der dritte Wert (485, 495) eine Funktion einer Begrenzung der Summe des ersten Wertes (275) und des zweiten Wertes (375) ist.

7. Verfahren nach einem der vorhergehenden Ansprüche, mit den weiteren Schritten:
erfassen des dritten Wertes (485, 495) der Radzielbeschleunigung für mindestens eine Situation, wobei die Situation die Radgeschwindigkeit (v), die Radbeschleunigung (a) und, optional, die Raddynamik (j) umfasst;
vergleichen des dritten Wertes (485, 495) mit dem entsprechenden Korrekturfaktor der mindestens einen Matrix (350); und
wenn der Schlupf (s) bei Verwendung des dritten Wertes (485, 495) geringer ist als bei Verwendung des entsprechenden Korrekturfaktors der mindestens einen Matrix (350), eintragen eines Updates des dritten Wertes (485, 495) in das entsprechende Element der mindestens einen Matrix (350).

8. Antriebsregelungssteuerung (190) zur Antriebsregelung von Aktuatoren (490, 480) mindestens eines Rades (120) eines Fahrzeugs (100), die Antriebsregelungssteuerung (190) aufweisend:
eine Signalerfassungseinheit (200), die zum Erfassen einer Radgeschwindigkeit (v) des Rades (120) und, optional, und zum Erfassen einer Radbeschleunigung (a) und/oder einer Raddynamik (j), eingerichtet ist;
eine weitere Erfassungseinheit (300), die zum Erfassen einer gewünschten Beschleunigung (DrvReq) und einer Fahrzeuggeschwindigkeit (v_{GND}) des Fahrzeugs (100) eingerichtet ist;
eine Zustandsbestimmungseinheit (220), die zum Bestimmen einer Zustandsbeschreibung (225) des Rades (120), aus der Radgeschwindigkeit (v) und der Radbeschleunigung (a), eingerichtet ist;
eine Aktionsbestimmungseinheit (250), die zum Bestimmen eines ersten Wertes (275) einer Radzielbeschleunigung, aus der Zustandsbeschreibung (225), einem Schlupf (s) des Rades (120) und der gewünschten Beschleunigung (DrvReq), eingerichtet ist, wobei der Schlupf (s) eine Funktion der Radgeschwindigkeit (v) und der Fahrzeuggeschwindigkeit (v_{GND}) ist;
**dadurch gekennzeichnet, dass** die Antriebsregelungssteuerung ferner eine Korrektureinheit (360) aufweist, aufweisend mindestens eine Matrix (350), die Korrekturfaktoren beinhaltet und die zum Bestimmen eines zweiten Wertes (375) der Radzielbeschleunigung eingerichtet ist; und
ein Aktuatorsteuergerät (400) aufweist, das zum Steuern der Aktuatoren (480, 490) des mindestens einen Rades (120) aus einer Funktion des ersten Wertes (275) und des zweiten Wertes (375) eingerichtet ist.

9. Fahrzeug (100), aufweisend eine Antriebsregelungssteuerung (190) nach Anspruch 8.

10. Programmelement, welches, wenn es auf einer Antriebsregelungssteuerung (190) nach Anspruch 8 ausgeführt wird, die Antriebsregelungssteuerung (190) anleitet, das Verfahren nach einem der Ansprüche 1 bis 7 durchzuführen.

11. Computerlesbares Medium, auf dem ein Programmelement nach Anspruch 10 gespeichert ist.

## Claims

1. Method for the drive control of actuators (490, 480) of at least one wheel (120) of a vehicle (100), comprising the following steps:
sensing a desired acceleration (DrvReq);
sensing a vehicle velocity (v_{GND}) of the vehicle (100);
sensing a wheel velocity (v) of the wheel (120);
determining a description of the condition (225) of the wheel (120) from the wheel velocity (v) and a wheel acceleration (a),
wherein the description of the condition (225) includes a static description (226) which is a function of the wheel velocity (v) and the wheel acceleration (a);
determining a first value (275) of a target wheel acceleration from the description of the condition (225), a slip (s) of the wheel (120) and the desired acceleration (DrvReq),
wherein the slip (s) is a function of wheel velocity (v) and the vehicle speed (v _{GND});
**characterized in that** the method comprises the following additional steps:
determining a second value (375) of the target wheel acceleration from the wheel velocity (v), the wheel acceleration (a) and the slip (s), wherein the second value is a function of correction factors of at least one matrix (350); and
determining a third value (485, 495) of the target wheel acceleration, which third value controls the actuators (480, 490) of the at least one wheel (120), wherein the third value (485, 495) is a function of the first value (275) and the second value (375).

2. Method according to Claim 1,
wherein the description of the condition (225) of the wheel (120) furthermore includes a dynamic description (227) which is a function of the wheel acceleration (a) and wheel dynamics (j).

3. Method according to Claim 2,
wherein the description of the condition (225) of the wheel (120) furthermore includes a predictive description (228) which is a function of the wheel dynamics (j).

4. Method according to one of the preceding claims,
wherein the correction factors of the at least one matrix (350) are sorted by ascending slip (s) and by ascending wheel acceleration (a), and
wherein the at least one matrix (350) includes a first region (351) whose elements have a correction factor of zero.

5. Method according to one of the preceding claims,
wherein the third value (485, 495) of the target wheel acceleration is a function of a sum of the first value (275) and the second value (375).

6. Method according to Claim 5,
wherein the third value (485, 495) is a function of a limiting of the sum of the first value (275) and the second value (375).

7. Method according to one of the preceding claims, comprising the following additional steps:
sensing the third value (485, 495) of the target wheel acceleration for at least one situation, wherein the situation includes the wheel velocity (v), the wheel acceleration (a) and, optionally, the wheel dynamics (j);
comparing the third value (485, 495) with the corresponding correction factor of the at least one matrix (350); and
if the slip (s) when using the third value (485, 495) is lower than when using the corresponding correction factor of the at least one matrix (350), entering an update of the third value (485, 495) into the corresponding element of the at least one matrix (350).

8. Drive-control control system (190) for the drive control of actuators (490, 480) of at least one wheel (120) of a vehicle (100), the drive-control control system (190) comprising the following:
a signal sensing unit (200) which is designed to sense a wheel velocity (v) of the wheel (120) and, optionally, to sense a wheel acceleration (a) and/or wheel dynamics (j);
an additional sensing unit (300) which is designed to sense a desired acceleration (DrvReq) and a vehicle velocity (v _{GND}) of the vehicle (100);
a condition determining unit (220) which is designed to determine a description of the condition (225) of the wheel (120) from the wheel velocity (v) and the wheel acceleration (a);
an action determining unit (250) which is designed to determine a first value (275) of a target wheel acceleration from the description of the condition (225), a slip (s) of the wheel (120) and the desired acceleration (DrvReq), wherein the slip (s) is a function of the wheel velocity (v) and the vehicle velocity (v_{GND});
**characterized in that** the drive-control control system also comprises a correction unit (360), comprising at least one matrix (350) which contains correction factors and which is designed to determine a second value (375) of the target wheel acceleration; and
an actuator control unit (400) which is designed to control the actuators (480, 490) of the at least one wheel (120) from a function of the first value (275) and the second value (375).

9. Vehicle (100), comprising a drive-control control system (190) according to Claim 8.

10. Program element which, when executed on a drive-control control system (190) according to Claim 8, instructs the drive-control control system (190) to carry out the method according to any one of Claims 1 to 7.

11. Computer-readable medium on which a program element according to Claim 10 is stored.

## Revendications

1. Procédé de régulation d'entraînement d'actionneurs (490, 480) d'au moins une roue (120) d'un véhicule (100), comprenant les étapes suivantes :
la détection d'une accélération souhaitée (DrvReq) ;
la détection d'une vitesse de véhicule (v_{GND}) du véhicule (100) ;
la détection d'une vitesse de roue (v) de la roue (120) ;
la détermination d'une description d'état (225) de la roue (120) à partir de la vitesse de roue (v) et d'une accélération de roue (a),
la description d'état (225) comprenant une description statique (226) qui est une fonction de la vitesse de roue (v) et de l'accélération de roue (a) ;
la détermination d'une première valeur (275) d'une accélération de roue cible à partir de la description d'état (225), d'un glissement (s) de la roue (120) et de l'accélération souhaitée (DrvReq),
le glissement (s) étant une fonction de la vitesse de roue (v) et de la vitesse de véhicule (v_{GND}) ;
**caractérisé en ce que** le procédé comprend les étapes supplémentaires suivantes :
la détermination d'une deuxième valeur (375) de l'accélération de roue cible à partir de la vitesse de roue (v), de l'accélération de roue (a) et du glissement (s), la deuxième valeur étant une fonction de facteurs de correction d'au moins une matrice (350) ; et
la détermination d'une troisième valeur (485, 495) de l'accélération de roue cible, qui commande les actionneurs (480, 490) de ladite au moins une roue (120), la troisième valeur (485, 495) étant une fonction de la première valeur (275) et de la deuxième valeur (375).

2. Procédé selon la revendication 1,
dans lequel la description d'état (225) de la roue (120) comprend en outre une description dynamique (227) qui est une fonction de l'accélération de roue (a) et d'une dynamique de roue (j).

3. Procédé selon la revendication 2,
dans lequel la description d'état (225) de la roue (120) comprend en outre une description prédictive (228) qui est une fonction de la dynamique de roue (j).

4. Procédé selon l'une des revendications précédentes,
dans lequel les facteurs de correction de ladite au moins une matrice (350) sont classés par glissement (s) croissant et par accélération de roue (a) croissante, et
dans lequel ladite au moins une matrice (350) présente une première zone (351) dont les éléments présentent un facteur de correction nul.

5. Procédé selon l'une des revendications précédentes,
dans lequel la troisième valeur (485, 495) de l'accélération de roue cible est une fonction d'une somme de la première valeur (275) et de la deuxième valeur (375).

6. Procédé selon la revendication 5,
dans lequel la troisième valeur (485, 495) est une fonction d'une limitation de la somme de la première valeur (275) et de la deuxième valeur (375).

7. Procédé selon l'une des revendications précédentes, comprenant les étapes supplémentaires suivantes :
la détection de la troisième valeur (485, 495) de l'accélération de roue cible pour au moins une situation, la situation comprenant la vitesse de roue (v), l'accélération de roue (a) et, en option, la dynamique de roue (j) ;
la comparaison de la troisième valeur (485, 495) au facteur de correction correspondant de ladite au moins une matrice (350) ; et
si le glissement (s) est plus faible lors de l'utilisation de la troisième valeur (485, 495) que lors de l'utilisation du facteur de correction correspondant de ladite au moins une matrice (350), l'introduction d'une mise à jour de la troisième valeur (485, 495) dans l'élément correspondant de ladite au moins une matrice (350).

8. Unité de commande de régulation d'entraînement (190) pour la régulation d'entraînement d'actionneurs (490, 480) d'au moins une roue (120) d'un véhicule (100), l'unité de commande de régulation d'entraînement (190) comportant :
une unité de détection de signal (200), qui est conçue pour détecter une vitesse de roue (v) de la roue (120) et, en option, pour détecter une accélération de roue (a) et/ou une dynamique de roue (j) ;
une autre unité de détection (300), qui est conçue pour détecter une accélération souhaitée (DrvReq) et une vitesse de véhicule (v_{GND}) du véhicule (100) ;
une unité de détermination d'état (220), qui est conçue pour déterminer une description d'état (225) de la roue (120), à partir de la vitesse de roue (v) et de l'accélération de roue (a) ;
une unité de détermination d'action (250), qui est conçue pour déterminer une première valeur (275) d'une accélération de roue cible, à partir de la description d'état (225), d'un glissement (s) de la roue (120) et de l'accélération souhaitée (DrvReq), le glissement (s) étant une fonction de la vitesse de roue (v) et de la vitesse de véhicule (v_{GND}) ;
**caractérisée en ce que** l'unité de commande de régulation d'entraînement comporte en outre une unité de correction (360), comportant au moins une matrice (350) qui contient des facteurs de correction et qui est conçue pour déterminer une deuxième valeur (375) de l'accélération de roue cible ; et
comporte un appareil de commande d'actionneur (400), qui est conçu pour commander les actionneurs (480, 490) de ladite au moins une roue (120) à partir d'une fonction de la première valeur (275) et de la deuxième valeur (375).

9. Véhicule (100), comportant une unité de commande de régulation d'entraînement (190) selon la revendication 8.

10. Élément de programme qui, lorsqu'il est exécuté sur une unité de commande de régulation d'entraînement (190) selon la revendication 8, amène l'unité de commande de régulation d'entraînement (190) à mettre en œuvre le procédé selon l'une des revendications 1 à 7.

11. Support lisible par ordinateur, sur lequel est stocké l'élément de programme selon la revendication 10.
